# EUROPEAN PATENT APPLICATION

(11) **EP 3 122 008 A1**
(43) Date of publication of application: **25.01.2017**
(21) Application number: 14890162.2
(22) Date of filing: 29.07.2014
(51) Int. Cl.: H04L 12/761

(54) **CLOUD DESKTOP PUSHING METHOD AND SYSTEM, PUSHING END AND RECEIVING END**

(30) Priority: 22.04.2014 CN 201410163177
(71) Applicant: ZTE Corporation, Shenzhen, Guangdong 518057 (CN)
(72) Inventor: ZHOU, Shijun, Shenzhen Guangdong 518057 (CN); YE, Yuwen, Shenzhen Guangdong 518057 (CN); DING, Yan, Shenzhen Guangdong 518057 (CN); FU, Guang, Shenzhen Guangdong 518057 (CN); CHEN, Xiaoqiang, Shenzhen Guangdong 518057 (CN); TU, Chenfeng, Shenzhen Guangdong 518057 (CN)
(74) Representative: Awapatent AB
(86) International application number: PCT/CN2014/083230
(87) International publication number: WO 2015/161576

(57) **Abstract**

A cloud desktop pushing method and system, and a pushing end and a receiving end are provided in the present invention. The cloud desktop pushing method includes: a cloud desktop pushing end submitting pushing end user information to a pushing end control node; the cloud desktop pushing end receiving at least one multicast group, herein the at least one multicast group is found by the pushing end control node according to the pushing end user information; and the cloud desktop pushing end sending data to the at least one multicast group by means of multicast. The occupancy rate of the bandwidth can be reduced in the present invention.

## Description

### Technical Field

The present invention relates to the field of communication, and more especially, refers to a cloud desktop pushing method and system, and a pushing end and a receiving end.

### Background of the Related Art

At present, with the evolution of the IT technology, creative technologies are made in aspect of infrastructure, and with the gradual maturity of the virtualization technology, cloud computing also develops into a new stage. Cloud computing is development and commerce implementation of concepts such as distributed processing, parallel computing and grid computing and so on, and the substance of the cloud computing technology is virtualization of IT software and hardware resources such as computing, storage, server and application software and so on, and cloud computing has its own unique technology in aspects of virtualization, data storage, data management and programming mode and so on.

A virtual machine, i.e., the server virtualization, is an important footstone of the underlying architecture of cloud computing. In the server virtualization, virtualization software is required to implement functions including hardware abstraction, resource allocation, scheduling and management, and isolation between a virtual machine and a host operating system and isolation among multiple virtual machines and so on.

A virtual desktop of cloud computing establishes a new Web application development and release platform based on cloud computing while taking advantage of and highlighting the merits of the desktop. The virtual desktop namely a Web desktop runs on browsers, which can integrate a Web application, a Web service, a C\S application, a C\S application server and a local client to be applied into one desktop environment.

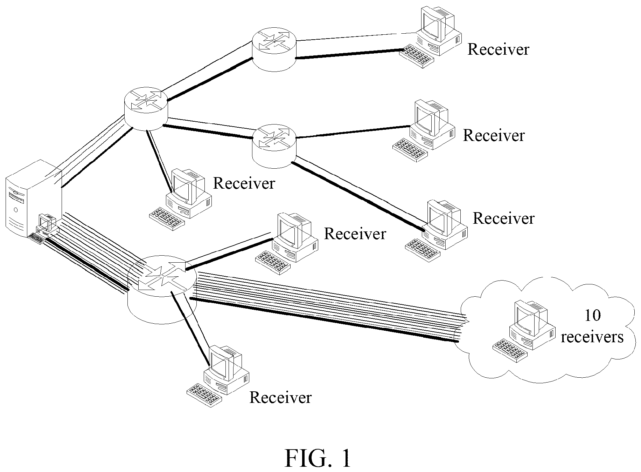

Currently, in the application process of the virtual desktop, each virtual desktop client is required to respectively establish a connection with a virtualization host to implement data transmission on the connection, and each user respectively uses his/her own virtual desktop. As shown in FIG. 1, it is a schematic diagram of a flow of unicast cloud desktop pushing, as can be seen that, in the flow, each cloud desktop user (receiver) will respectively establish a data transmission channel with the virtualization host. But in certain scenarios, such as in a video network teaching scenario, a desktop actually seen on each student's client desktop is required to be played synchronously with contents on a teacher's desktop, in this case, if the number of students is large, each student respectively establishes a link with the virtual host and independently performs data transmission, thus the bandwidth has a bottleneck.

### Summary of the Invention

The technical problem required to be solved in the present invention is to provide a cloud desktop pushing method and system, and a pushing end and a receiving end, which can reduce the occupancy rate of the bandwidth.

On one aspect, a cloud desktop pushing method is provided, which includes: a cloud desktop pushing end submitting pushing end user information to a pushing end control node; the cloud desktop pushing end receiving at least one multicast group, herein the at least one multicast group is found by the pushing end control node according to the pushing end user information; and the cloud desktop pushing end sending data to the at least one multicast group by means of multicast.

Before the step of the cloud desktop pushing end receiving at least one multicast group corresponding to the cloud desktop pushing end, which is found according to the pushing end user information by the pushing end control node, the method further includes: the cloud desktop pushing end receiving a message of successful authentication which is performed according to the pushing end user information by the pushing end control node.

The step of the cloud desktop pushing end sending data to the at least one multicast group by means of multicast includes: the cloud desktop pushing end acquiring a command for selecting the at least one multicast group; and the cloud desktop pushing end sending data to the selected at least one multicast group by means of multicast according to the command for selecting.

The method further includes: the cloud desktop pushing end sending a control instruction to at least one cloud desktop receiving end via a control link to make the cloud desktop receiving end execute the control instruction.

The method further includes: the cloud desktop pushing end receiving receiving end user change information of the multicast group from the pushing end control node; and the cloud desktop pushing end controlling an added or deleted cloud desktop receiving end according to the receiving end user change information.

On another aspect, a cloud desktop pushing method is provided, which includes: a cloud desktop receiving end submitting receiving end user information to a receiving end control node; the cloud desktop receiving end receiving at least one multicast group to which the receiving end user belongs, herein the at least one multicast group is found by the receiving end control node according to the receiving end user information; and the cloud desktop receiving end receiving information from the at least one multicast group.

The method further includes: the cloud desktop receiving end receiving a control instruction from a cloud desktop pushing end via a control link; and the cloud desktop receiving end executing the control instruction.

Before the step of the cloud desktop receiving end receiving the at least one multicast group, the method further includes: the cloud desktop receiving end receiving a message of successful authentication, herein the authentication is performed by the receiving end control node according to the receiving end user information.

On another aspect, a cloud desktop pushing end is provided, which includes: a submission unit, submitting pushing end user information to a pushing end control node; a receiving unit, receiving at least one multicast group, herein the at least one multicast group is found by the pushing end control node according to the pushing end user information; and a sending unit, sending data to the at least one multicast group by means of multicast.

The cloud desktop pushing end further includes: a control unit, sending a control instruction to at least one cloud desktop receiving end via a control link to make the cloud desktop receiving end execute the control instruction.

On another aspect, a cloud desktop receiving end is provided, which includes: a submission unit, submitting receiving end user information to a receiving end control node; a first receiving unit, receiving at least one multicast group to which the receiving end user belongs, herein the at least one multicast group is found by the receiving end control node according to the receiving end user information; and a second receiving unit, receiving information from the at least one multicast group.

The cloud desktop receiving end further includes: a third receiving unit, receiving a control instruction from a cloud desktop pushing end via a control link; and an execution unit, executing the control instruction.

On another aspect, a cloud desktop pushing system is provided, which includes: a cloud desktop pushing end and a cloud desktop receiving end; herein, the cloud desktop pushing end submits pushing end user information to a pushing end control node; and receives at least one multicast group, herein the at least one multicast group is found by the pushing end control node according to the pushing end user information; and sends data to the at least one multicast group by means of multicast; the cloud desktop receiving end submits receiving end user information to a receiving end control node; and receives at least one multicast group to which the receiving end user belongs, herein the at least one multicast group is found by the receiving end control node according to the receiving end user information; and receives information from the at least one multicast group.

The beneficial effects of the above technical scheme of the present invention are described as follows: in the present invention, in a cloud system, the cloud desktop receiving end pushes data to the cloud desktop receiving end by means of multicast, which can reduce the occupancy rate of the bandwidth by means of multicast.

### Brief Description of Drawings

FIG. 1 shows a flow diagram of unicast desktop data in the existing art.
FIG. 2 is a flow diagram of a cloud desktop pushing method according to one embodiment of the present invention.
FIG. 3 is a flow diagram of a cloud desktop pushing method according to another embodiment of the present invention.
FIG. 4 is a connection diagram of a cloud desktop pushing end according to the present invention.
FIG. 5 is a connection diagram of a cloud desktop receiving end according to the present invention.
FIG. 6 is a connection diagram of a pushing system according to the present invention.
FIG. 7 is a diagram of multicast desktop data interaction in the application scenario of the present invention.
FIG. 8 is a connection diagram of a control node according to the present invention.

### Specified Embodiments

In order to make the technical problem required to be solved in the present invention, technical scheme and advantages more clear, detailed descriptions will be made in combination with the accompanying drawings and specific embodiments below.

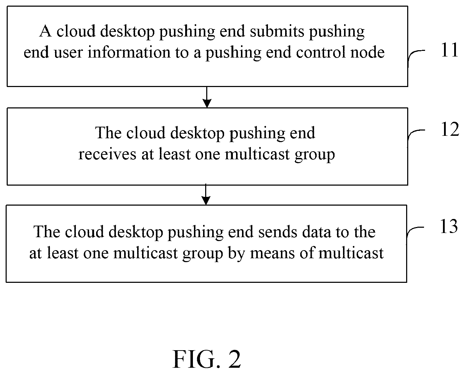

As shown in FIG. 2, it is a cloud desktop pushing method according to one embodiment of the present invention, and the following steps are included:
In step 11, a cloud desktop pushing end submits pushing end user information to a pushing end control node; and the pushing end user information includes a user name and a password.

In step 12, at least one multicast group is received, and the at least one multicast group is found by the pushing end control node according to the pushing end user information;

In step 13, the cloud desktop pushing end sends data to at least one multicast group found by means of multicast.

Alternatively, the step 13 includes:
the cloud desktop pushing end acquires a command for selecting at least one multicast group; and
the cloud desktop pushing end sends data to the selected at least one multicast group by means of multicast according to the command for selecting.

A cloud desktop pushing method according to another embodiment of the present invention will be described below, and the following steps are included:
In step 21, a cloud desktop pushing end submits pushing end user information to a pushing end control node; and the pushing end control node performs authentication according to the pushing end user information. If the authentication is successful, the next step will be executed. Specifically, the step includes: a pushing desktop user logins through the portal and submits the user information to the control node, the information mainly includes: a user name and a user password. The control node performs authentication on the user after receiving the information, and checks whether the user has a permission of the cloud desktop login.

In step 22, the cloud desktop pushing end receives a message of successful authentication which is performed according to the pushing end user information by the pushing end control node.

In step 23, at least one multicast group is received, and the at least one multicast group is found by the pushing end control node according to the pushing end user information; the step specifically includes: after the authentication is passed, the control node queries out that the user belongs to a pushing desktop, and queries out related group information including a group name and a group number of the multicast group and all user information of a receiving desktop belonging to the group at the same time. Meanwhile, a status of the pushing desktop and login IP information are recorded at the control node. The control node feeds back the group information and the receiving desktop information to the pushing desktop.

In step 24, the cloud desktop pushing end sends data to the found at least one multicast group by means of multicast. The step specifically includes: a pushing desktop client displays information of all cloud desktops that may be operated by the user, and if the operating user selects a pushing desktop, then a pushing cloud desktop will be started. The cloud desktop is a desktop different from a common cloud desktop, the pushing desktop may be chosen to be played (that is, data are pushed to a receiving desktop), paused (pushing is paused, a desktop seen on the receiving desktop is in a paused state), resumed (pushing is resumed, the desktop seen on the receiving desktop resumes to a playing state) and stopped (pushing is stopped, the desktop on the receiving desktop is closed). The playing process of the pushing desktop is a process of the desktop sending messages to the multicast group, and for a receiving desktop in a receiving state currently, a receiving client is popped up to play the desktop contents.

Alternatively, the method further includes:
In step 25, a cloud desktop receiving end submits receiving end user information to a receiving end control node; and the receiving end control node performs authentication according to the receiving end user information. If the authentication is successful, the next step will be executed. The step specifically includes: a receiving desktop user logins through the portal and submits the user information to the control node, the information mainly includes: a user name and a user password. The control node performs authentication on the user after receiving the information, and checks whether the user has a permission of the cloud desktop login.

In step 26, the cloud desktop receiving end receives a message of successful authentication, and the authentication is performed by the receiving end control node according to the receiving end user information.

In step 27, the cloud desktop receiving end receives at least one multicast group to which a receiving end user belongs, and the at least one multicast group is found by the pushing end control node according to the receiving end user information; the step specifically includes: after the authentication is passed, the control node queries out that the user belongs to a pushing desktop, and queries out related group information including a group name and a group number of the multicast group and all user information of the receiving desktop belonging to the group at the same time. Meanwhile, a status of the pushing desktop and login IP information are recorded at the control node. The control node feeds back the group information and the receiving desktop information to the pushing desktop.

In step 28, the cloud desktop receiving end receives information from at least one multicast group. The step specifically includes: the pushing desktop client displays information of all cloud desktops that may be operated by the user, and if the operating user selects a pushing desktop, then a pushing cloud desktop will be started. The cloud desktop is a desktop different from a common cloud desktop, the pushing desktop may be chosen to be played (that is, data are pushed to a receiving desktop), paused (pushing is paused, a desktop seen on the receiving desktop is in a paused state), resumed (pushing is resumed, the desktop seen on the receiving desktop resumes to a playing state) and stopped (pushing is stopped, the desktop on the receiving desktop is closed). The playing process of the pushing desktop is a process of the desktop sending messages to the multicast group, and for a receiving desktop in a receiving state currently, a receiving client is popped up to play the desktop contents.

Alternatively, the method further includes:
In step 29, the cloud desktop pushing end sends a control instruction to at least one cloud desktop receiving end via a control link, so as to make the cloud desktop receiving end execute the control instruction. Herein, the control instruction may be: starting, closing, maximizing and minimizing a certain receiving desktop.

The method further includes:
In step 210, the cloud desktop pushing end receives receiving end user change information of the multicast group from the pushing end control node;

In step 211, the cloud desktop pushing end controls an added or deleted cloud desktop receiving end according to the receiving end user change information. For example, after the pushing desktop receives the change information, such as receiving desktop information changes and a member quits, if the receiving desktop is in a logged-in state, the client will be notified via the control link to close the multicast desktop.

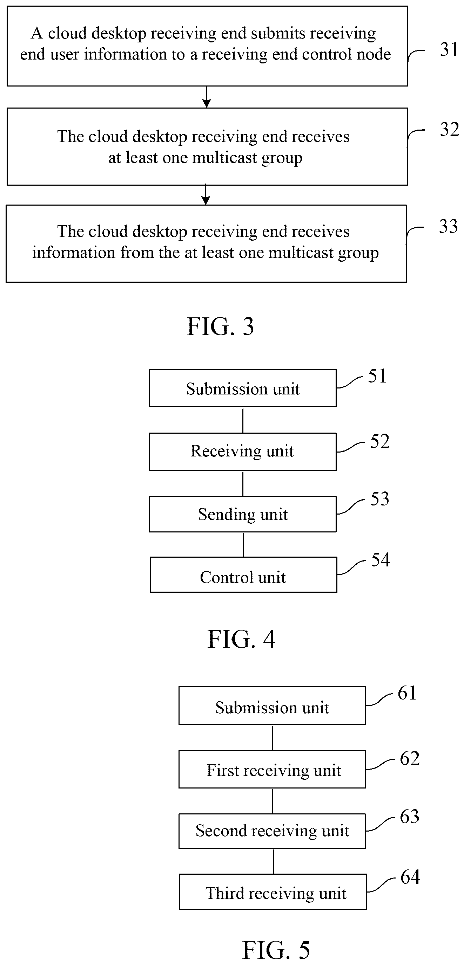

As shown in FIG. 3, it is a cloud desktop pushing method according to one embodiment of the present invention, and the following steps are included:
In step 31, a cloud desktop receiving end submits receiving end user information to a receiving end control node;

In step 32, the cloud desktop receiving end receives at least one multicast group to which a receiving end user belongs, and the at least one multicast group is found by the pushing end control node according to the receiving end user information;

In step 33, the cloud desktop receiving end receives information from the at least one multicast group.

A cloud desktop pushing method according to another embodiment of the present invention will be described below, and the following steps are included:
In step 41, a cloud desktop receiving end submits receiving end user information to a receiving end control node; and the receiving end control node performs authentication according to the receiving end user information. If the authentication is successful, the next step will be executed.

In step 42, the cloud desktop receiving end receives a message of successful authentication performed by the receiving end control node according to the receiving end user information.

In step 43, at least one multicast group to which a receiving end user belongs is received, and the at least one multicast group is found by the pushing end control node according to the receiving end user information.

In step 44, the cloud desktop receiving end receives information from the at least one multicast group.

The method further includes:
In step 45, the cloud desktop receiving end receives a control instruction from a cloud desktop pushing end via a control link.

In step 46, the cloud desktop receiving end executes the control instruction.

As shown in FIG. 4, it is a cloud desktop pushing end according to the present invention, which includes:
a submission unit 51, which submits pushing end user information to a pushing end control node;
a receiving unit 52, which receives at least one multicast group, herein the at least one multicast group is found by the pushing end control node according to the pushing end user information; and
a sending unit 53, which sends data to the found at least one multicast group by means of multicast.

The cloud desktop pushing end further includes:
a control unit 54, which sends a control instruction to at least one cloud desktop receiving end via a control link to make the cloud desktop receiving end execute the control instruction.

As shown in FIG. 5, it is a cloud desktop receiving end according to the present invention, which includes:
a submission unit 61, which submits receiving end user information to a receiving end control node;
a first receiving unit 62, which receives at least one multicast group to which a receiving end user belongs, herein the at least one multicast group is found by the pushing end control node according to the receiving end user information; and
a second receiving unit 63, which receives information from the at least one multicast group.

The cloud desktop receiving end further includes:
a third receiving unit 64, which receives a control instruction from a cloud desktop pushing end via a control link; and
an execution unit, which executes the control instruction.

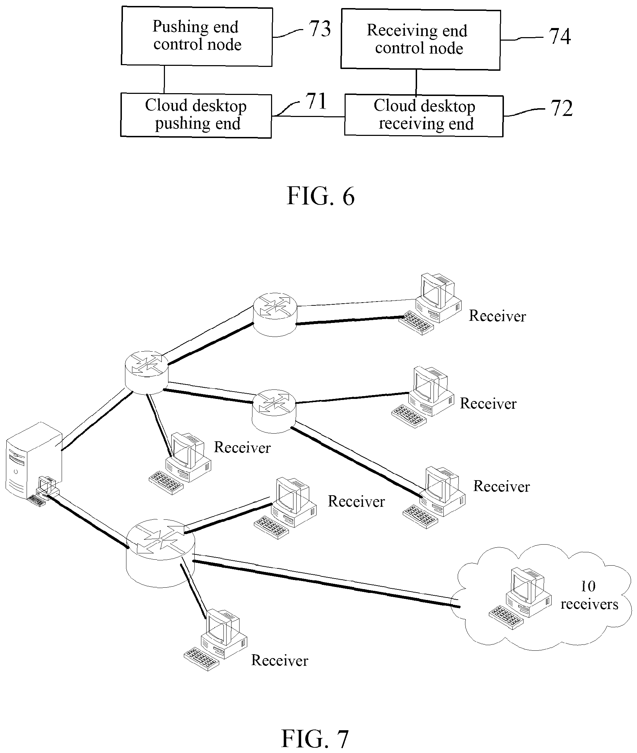

As shown in FIG. 6, it is a cloud desktop pushing system according to the present invention, which includes: a cloud desktop pushing end 71, a cloud desktop receiving end 72, a pushing end control node 73 and a receiving end control node 74; herein,
the cloud desktop pushing end 71 submits pushing end user information to the pushing end control node 73; receives at least one multicast group, herein the at least one multicast group is found by the pushing end control node according to the pushing end user information; and sends data to the found at least one multicast group by means of multicast;
the cloud desktop receiving end 72 submits receiving end user information to the receiving end control node 74; receives at least one multicast group to which the receiving end user belongs, herein the at least one multicast group is found by the pushing end control node according to the receiving end user information; and receives information from the at least one multicast group.

The application scenario of the present invention will be described below. In the present invention, a cloud desktop pushed by the multicast is called a pushing desktop for short, and a received desktop pushed by the multicast is called a receiving desktop for short.

FIG. 7 shows a schematic diagram of a flow of multicast cloud desktop pushing after modification, and compared with FIG. 1, the number of connections between the virtualization host and various switch routers is decreased obviously, and for one pushing desktop, the virtualization host is only required to push desktop data for one time, which greatly reduces the bandwidth load, and also reduces the performance loss of the host.

A login register method for the pushing desktop will be described below. Herein, the control node belongs to a system support node and needs to operate normally before being used by the user, and the pushing desktop data and receiving desktop data have been correctly configured. The following steps are included:
In step 1, a pushing desktop user logins through the portal and submits user information to a control node, the information mainly includes: a user name and a user password.

In step 2, the control node performs authentication on the user after receiving the information, and checks whether the user has a permission of the cloud desktop login.

In step 3, after the authentication is passed, the control node queries out that the user belongs to a pushing desktop, and queries out related group information including a group name and a group number of the multicast group and all user information of a receiving desktop belonging to the group at the same time. Meanwhile, a status of the pushing desktop and login IP information are recorded at the control node.

In step 4, the control node feeds back the group information and the receiving desktop information to the pushing desktop.

In step 5, a pushing desktop client displays information of all cloud desktops that may be operated by the user, and if the operating user selects a pushing desktop, then a pushing cloud desktop will be started. The cloud desktop is a desktop different from a common cloud desktop, the pushing desktop may be chosen to be played (that is, data are pushed to a receiving desktop), paused (pushing is paused, a desktop seen on the receiving desktop is in a paused state), resumed (pushing is resumed, the desktop seen on the receiving desktop resumes to a playing state) and stopped (pushing is stopped, the desktop on the receiving desktop is closed). The playing process of the pushing desktop is a process of the desktop sending messages to the multicast group, and for a receiving desktop in a receiving state currently, a receiving client is popped up to play the desktop contents.

In the above process, login times of the pushing desktop and receiving desktop have not a particular order, the pushing desktop is responsible for sending messages to the multicast group, and the receiving desktop takes charge of receiving the messages from the multicast group.

A login flow of the receiving desktop will be described below, and the following steps are included:
In step 1, a receiving desktop user logins through the portal and submits user information to a control node, the information mainly includes: a user name and a user password.

In step 2, the control node performs authentication on the user after receiving the information, and checks whether the user has a permission of the cloud desktop login.

In step 3, after the authentication is passed, it is to query out that the user belongs to a receiving desktop of a certain multicast group, and query out teacher computer information of related group information including a group name and a group number of the belonged group at the same time. Meanwhile, a login status of the receiving desktop and login IP information are recorded at the control node.

In step 4, the control node feeds back the group information and the pushing desktop information to the receiving desktop. The receiving desktop client displays information of all cloud desktops that may be operated by the user, and if the operating user selects a receiving cloud desktop, the receiving cloud desktop is started. After the receiving desktop is started, multicast data of the belonged group are received, and the desktop is displayed.

A schematic diagram of a flow of the pushing desktop controlling the receiving desktop will be described below, and the following steps are included:
In step 1, a heartbeat message is sent between the pushing desktop and the receiving desktop, the heartbeat message is a control message, and one link is separately used for controlling. The pushing desktop and the receiving desktop mutually send a heartbeat message at scheduled time.

In step 2, in a case that the pushing desktop needs to control the receiving desktop, for example, the pushing desktop requires starting, closing, maximizing and minimizing a certain receiving desktop, the pushing desktop sends a message to a pushing desktop client via a control link, and the pushing desktop client performs control processing.

A schematic diagram of a flow of data changing will be described below, and the following steps are included:
In step 1, in a case that a maintainer changes information of the pushing desktop and receiving desktop, a data changing flow is triggered, the related data are maintained at a control node, and when a change is sent, the control node informs a teacher computer. If the pushing desktop is not started, no notification is required, and the data read when the pushing desktop is started are the latest data.

In step 2, after the pushing desktop receives the change information, for example, receiving desktop information changes and a member quits, if the receiving desktop is in a logged-in state, the client will be informed via the control link to close the multicast desktop.

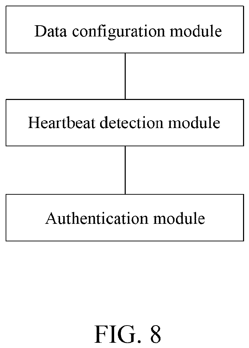

FIG. 8 shows a schematic diagram of internal modules of a control node, and the control node is used for functions such as data maintenance and message authentication and so on.

There are mainly three modules:
a data configuration module, which is provided for the maintainer to perform configuration functions for related data of the pushing desktop and receiving desktop, herein, configuration data include a multicast group name, a pushing desktop number and a receiving desktop number and so on, and in a case that the data are changed, the pushing desktop needs to be notified.

An authentication module, which is provided for a desktop user to authenticate the user permission when the desktop user logins. Both the pushing desktop and the receiving desktop may perform authentication.

A heartbeat detection module, configured to perform heartbeat detection between the control node and the pushing desktop, the control node only concerns a status of the pushing desktop, and a status of the receiving desktop is controlled by the pushing desktop.

The above description is the preferred embodiments of the present invention, it should be pointed out that, for those ordinary people skilled in the art, a plurality of improvements and modifications also can be made without departing from the principle of the present invention, and all these improvements and modifications should fall into the protection scope of the present invention.

### Industrial Applicability

As mentioned above, through the above embodiments and preferred embodiments, in a cloud system, the cloud desktop receiving end pushes the data to the cloud desktop receiving end by means of multicast, which can reduce the occupancy rate of the bandwidth by means of multicast.

## Claims

1. A cloud desktop pushing method, comprising:
a cloud desktop pushing end submitting pushing end user information to a pushing end control node;
the cloud desktop pushing end receiving at least one multicast group, wherein the at least one multicast group is found by the pushing end control node according to the pushing end user information; and
the cloud desktop pushing end sending data to the at least one multicast group by means of multicast.

2. The method according to claim 1, wherein, before the step of the cloud desktop pushing end receiving at least one multicast group, the method further comprises:
the cloud desktop pushing end receiving a message of successful authentication, wherein the authentication is performed by the pushing end control node according to the pushing end user information.

3. The method according to claim 1, wherein, the step of the cloud desktop pushing end sending data to the at least one multicast group by means of multicast comprises:
the cloud desktop pushing end acquiring a command for selecting the at least one multicast group; and
the cloud desktop pushing end sending the data to the selected at least one multicast group by means of multicast according to the command for selecting.

4. The method according to claim 1, wherein, the method further comprises:
the cloud desktop pushing end sending a control instruction to at least one cloud desktop receiving end via a control link to make the cloud desktop receiving end execute the control instruction.

5. The method according to claim 1, wherein, the method further comprises:
the cloud desktop pushing end receiving receiving end user change information of the multicast group from the pushing end control node; and
the cloud desktop pushing end controlling an added or deleted cloud desktop receiving end according to the receiving end user change information.

6. A cloud desktop pushing method, comprising:
a cloud desktop receiving end submitting receiving end user information to a receiving end control node;
the cloud desktop receiving end receiving at least one multicast group to which the receiving end user belongs, wherein the at least one multicast group is found by the receiving end control node according to the receiving end user information; and
the cloud desktop receiving end receiving information from the at least one multicast group.

7. The method according to claim 6, wherein the method further comprises:
the cloud desktop receiving end receiving a control instruction from a cloud desktop pushing end via a control link; and
the cloud desktop receiving end executing the control instruction.

8. The method according to claim 6, wherein, before the step of the cloud desktop receiving end receiving the at least one multicast group to which the receiving end user belongs, the method further comprises:
the cloud desktop receiving end receiving a message of successful authentication, wherein the authentication is performed by the receiving end control node according to the receiving end user information.

9. A cloud desktop pushing end, comprising:
a submission unit, submitting pushing end user information to a pushing end control node;
a receiving unit, at least one multicast group, wherein the at least one multicast group is found by the pushing end control node according to the pushing end user information; and
a sending unit, sending data to the at least one multicast group by means of multicast.

10. The cloud desktop pushing end according to claim 9, wherein, the cloud desktop pushing end further comprises:
a control unit, sending a control instruction to at least one cloud desktop receiving end via a control link to make the cloud desktop receiving end execute the control instruction.

11. A cloud desktop receiving end, comprising:
a submission unit, submitting receiving end user information to a receiving end control node;
a first receiving unit, receiving at least one multicast group to which the receiving end user belongs, wherein the at least one multicast group is found by the receiving end control node according to the receiving end user information; and
a second receiving unit, receiving information from the at least one multicast group.

12. The cloud desktop receiving end according to claim 11, wherein, the cloud desktop receiving end further comprises:
a third receiving unit, receiving a control instruction from a cloud desktop pushing end via a control link; and
an execution unit, executing the control instruction.

13. A cloud desktop pushing system, comprising: a cloud desktop pushing end and a cloud desktop receiving end; wherein,
the cloud desktop pushing end submits pushing end user information to a pushing end control node; and receives at least one multicast group, wherein the at least one multicast group is found by the pushing end control node according to the pushing end user information; and sends data to the at least one multicast group by means of multicast;
the cloud desktop receiving end submits receiving end user information to a receiving end control node; and receives at least one multicast group to which the receiving end user belongs, wherein the at least one multicast group is found by the receiving end control node according to the receiving end user information; and receives information from the at least one multicast group.
